# EUROPEAN PATENT SPECIFICATION

(11) **EP 0 845 194 B1**
(45) Date of publication and mention of the grant of the patent: **24.10.2001**
(21) Application number: 96929262.2
(22) Date of filing: 16.08.1996
(51) Int. Cl.: H04Q 7/32

(54) **METHOD AND APPARATUS FOR ACCESSING A PLURALITY OF NETWORKS**
VERFAHREN UND VORRICHTUNG ZUM ZUGREIFEN AUF MEHERE NETZWERKE
PROCEDE ET APPAREIL D'ACCES A UNE PLURALITE DE RESEAUX

(30) Priority: 17.08.1995 GB 9516870; 16.07.1996 GB 9614922
(43) Date of publication of application: 03.06.1998
(73) Proprietor: MOTOROLA LTD, Basingstoke, Hampshire RG22 4PD (GB)
(72) Inventor: ROBINSON, William, 78860 Saint Nom la Breteche (FR); WHINNETT, Nicholas, 75004 Paris (FR); GIBBS, Jonathan, Southampton, Hampshire SO30 2XF (GB); VAN DEN HEUVEL, Anthony, 78120 Clairefontaine (FR)
(74) Representative: Potts, Susan Patricia
(86) International application number: EP9603615
(87) International publication number: WO9707642

(56) References cited:
- EP-A- 0 048 868
- WO-A-94/28686
- WO-A-95/07009
- WO-A-95/12293
- PROCEEDINGS OF THE GLOBAL TELECOMMUNICATIONS CONFERENCE (GLOBECOM), SAN FRANCISCO, NOV. 28 - DEC. 2, 1994, vol. 2 OF 3, 28 November 1994, INSTITUTE OF ELECTRICAL AND ELECTRONICS ENGINEERS, pages 707-709, XP000488635 BEDINGFIELD C: "ON THE "PERSONALIZATION" OF PCS"

## Description

### Field of the Invention

The present invention is generally related to telecommunication devices and system, and more particularly, to a method and apparatus for providing a number of different services.

### Background of the Invention

Telecommunications systems are offering an increasingly sophisticated set of services to end users. For example in the Global System for Mobile Communications (GSM), many new services, such as high speed circuit switched data, packet data services, etc., are planned for introduction in the next few years. The next generation of telecommunications systems, e.g. the Universal Mobile Telecommunications System (UMTS), is expected to have even more services available to the end user. The end user will be able to subscribe to a large number of different services and may require a plurality of different terminals for use with different services or sets of services. For example the end user may choose to have one terminal (mobile phone) for voice telephony services, a different terminal (fax machine) for fax services and yet another terminal (laptop computer) for packet data services. Of course, it is also possible to provide access to more than one service at one terminal.

It is desirable for the user to have one dialable number for all his telecommunications needs. In the present GSM system, the dialable number is associated with a Subscriber Identity Module (SIM). The SIM can be inserted into and removed from the terminal by the user in order to register and de-register with the network/service provider for telecommunications services. However, such a SIM cannot be used to register more than one terminal at the same time, because whenever the SIM is removed, the terminal is automatically de-registered. The result of this limitation is that if a user is engaged in a telecommunications service using one of his terminals, his other terminals are unavailable for other services.

Also, if one looks at almost any business card, one can immediately see that most people have a number of different addresses which can be used to contact the individual, with each address representing a contact identity for a subset of the total services available to the individual. This situation is undesirable because the calling party is required to remember and store all of these different dialable identities. Furthermore the calling party must select the appropriate called party identity for the service being invoked.

In the future, it will be desirable to minimize the number of identities associated with a user, preferably to just one or two numbers for all services. For example, a user could have one business number and one private number, with each number providing access to all of the telecommunications services the user needs in each role (i.e. business role or private role). The concept of number portability between networks has already been accomplished by the roaming capability of GSM. However, each GSM dialable number belongs to only one GSM network and is allocated to a particular subscriber within the subscription domain of that network. In the future it will be desirable for the ownership of dialable numbers to be independent of the specific network and to be associated with the individual user.

Accordingly, there is a need for a method and means for allowing a user to simultaneously access services from different networks while retaining the option of using only one dialable number for all services.

WO-A-9507009 discloses a means for enabling a network to route calls to subscribers who may be mobile. A subscriber registers his identity with a terminal whose location identity is transmitted to and stored in the network's memory.

EP-A-0048868 discloses a communications system which allows a subscriber terminal to be registered simultaneously with a plurality of "domains" so that routing of incoming calls can be done more efficiently.

### Summary of the Invention

According to a first aspect of the present invention, there is provided a telecommunications system comprising: a service provider providing a plurality of services; a user set of one or more terminals; a controller having an identifier stored therein; the or each terminal having: means for reading the identifier, and characterised by, in the or each terminal means for selecting one or more of the plurality of services to be associated with the identifier as a first set of selected services, means in the or each terminal for communicating to the service provider the identifier and information as to the first set of selected services, and means in the or each terminal for selecting a mode of operation of the terminal where association between the terminal and the controller is not required to maintain the availability of the first set of selected services at the terminal, whereby the terminal can maintain availability of the first set of selected services of the service provider when the controller is no longer associated with the terminal.

According to a second aspect of the present invention, there is provided a method of simultaneously providing access at different terminals to different services offered by a service provider, the method comprising the steps of: associating a controller having an identifier stored therein with one of the different terminals; reading by the terminal from the controller the identifier; and characterised by selecting to which of the different services the terminal shall provide access; storing a list of the selected services in the terminal; communicating by the terminal to the service provider the identifier and the list of selected services; selecting a first mode of the terminal wherein the association between the terminal and the controller is not required to maintain the availability of the selected services by the terminal; de-associating the controller from the terminal ; and repeating the above steps for as many different terminals and different selections of services as are required so that different terminals provide access to different services simultaneously.

Preferably, the method further comprises the steps of: reading by the terminal from the controller communication enabling information; and when the first mode is selected, storing the communication enabling information.

Preferably, the step of associating comprises inserting the controller, which is a removable module, into the or each terminal so that the terminal can read the identifier and any communication enabling information, and the step of de-associating comprises removing the controller from the terminal.

Preferably, the method further comprises the step of storing, in a storage means in the service provider, information regarding which services are currently selected for a particular identifier.

Preferably, the method further comprises the step of additionally storing, in the storage means, information regarding which sets of services are currently available for the particular identifier.

Preferably, the method further comprises the step of receiving, at the service provider, a request from a particular terminal to provide access to a requested set of one or more services for the particular identifier.

Preferably, the method further comprises the steps of comparing, by a comparator in the service provider, each service in the requested set with the currently selected services for the particular identifier and providing a first output when the requested service is the same as one of the currently selected services and a second output when the requested service is not the same as one of the currently selected services.

Preferably, the method further comprises the steps of, by a first control means, denying access to the requested service if the comparator provides the first output and allowing access to the requested service if the comparator provides the second output.

Preferably, the method further comprises the steps of creating and storing in the storage means a second set of selected services containing the requested set of services excluding any services to which access is denied.

Preferably, the method further comprises the steps of, when the comparator provides the first output, providing an indication of which set of selected services includes a service which is the same as the requested service.

Preferably, the method further comprises the steps of, by a second control means, creating and storing in the strorage means a new set of selected services containing the requested set of services and removing from any of the current set of selected services any service which is contained in the new set of selected services.

Preferably, the method further comprises the steps of, at the terminal, selecting which of the first control means and the second control means shall be used and communicating this selection to the service provider.

### Brief Description of the Drawings

FIG. 1 is a block diagram of a communication system according to the present invention;
FIG. 2 is a block diagram of a communication system according to an alternate embodiment of the present invention;
FIG. 3 is a block diagram of a communication system according to another alternate embodiment of the present invention.
FIG. 4 is a block diagram of a terminal according to the present invention;
FIG. 5 is a block diagram of a service provider according to the present invention;
FIG. 6 is a flow chart showing the registration of a terminal to multiple networks according to the present invention;
FIG. 7 is a flow chart showing the method of accepting or denying service according to the present invention;
FIG. 8 is a flow chart showing the preferred method of accepting or denying service according to the present invention;
FIG. 9 is a flow chart showing a method for accessing multiple networks according the present invention;
FIG. 10 is a flow chart showing a method for accessing multiple networks according to an alternate embodiment of the present invention;
FIG. 11 is a flow chart showing steps of a deregistration procedure for a network;
FIG. 12 is a flow chart showing the deregistration process at the UIM network;
FIG. 13 is a flow chart showing the deregistration process at the service network;
FIG. 14 is a flow chart showing the deregistration process at a terminal generally;
FIG. 15 is a flow chart showing the deregistration process at a UIM terminal;
FIG. 16 is a flow chart showing the method for multiple registration profile inquiry in a multiple network environment;
FIG. 17 is a flow chart showing the steps for generating a service activity report; and
FIG. 18 is a block diagram of an apparatus for communicating with a plurality of networks.

### Detailed Description of the Invention

The method of the present invention relies on the use of a removable User Identity Module (UIM), which can store information about multiple subscriptions to multiple networks. The UIM preferably can store information including information about which services the user has subscribed to and with which networks these services have been subscribed. The information stored in the UIM also preferably includes information about which services are currently registered with which network. Additionally, the UIM, or less advantageously the terminal, is preferably adapted to use the information stored in the UIM to detect whether a specific service has been registered and with which network it is registered to prevent the registration of a service on one network if that service is already registered via a different network.

The terminals preferably allow the user to select services for registration (e.g. via menu selection) and with which network. Also, the serving network preferably indicates to the terminal (e.g. via broadcast messages) which services the network can support. The terminal also determines which of those services supported by the network it also supports, and the tariffs for those services. The terminal also preferably determines via information contained in the UIM, which of the services the user has subscribed to and consequently displays information about which services are accessible to the user via this terminal and this network, the services are currently registered and via which networks they are registered (e.g. via a display). Finally, the terminal also informs the user as to the outcome of the users attempt to register services (e.g. via a display).

The UIM and the terminal together are adapted to exchange information regarding requested services for registration and the status of each service being proposed for registration. After the UIM is inserted into the first terminal, the terminal detects a first user set of services selected to be registered and the network with which these services are to be registered, taking account of the accessibility of services according to network, terminal and subscription capabilities. According to one aspect of the invention, the terminal could be adapted to block any outgoing calls if the UIM is not in the device, while allowing incoming calls. The terminal informs the UIM of the first user set of services. Optionally, this selection of the first user set of services could be automated by the terminal. The UIM checks the information stored in the UIM to test that none of the first user set of services are currently already registered with a different network.

As this is the first registration attempt, all of the first user set of services which have been subscribed for access via the first network are given the "go" status by the UIM. The terminal registers the first user set of services with the first network. The UIM is informed of the registration status of the first user set of services by the terminal while the user is informed of the registration status of the first user set of services by the terminal. The UIM preferably stores the registration status of all of the services in the first set of services. Subsequently, the UIM may be removed from the first terminal and inserted into a second terminal. A second user set of services to be registered and the networks with which these services are to be registered are selected. The registration for the second set of services does not essentially require the use of a second terminal. If the first terminal has the capability to access multiple networks simultaneously, then the second set of services can be registered via the first terminal. This process is repeated for as many user sets of services as appropriate.

The present invention allows users to simultaneously have access to services from different networks whilst enabling the UIM to prevent any service from being simultaneously registered with two different networks, and allows all of the services subscribed and registered to be associated with the user's single identity where this is desirable. In the case of the terminal roaming to a visited network, the visited network may reject the registration attempt for one or more of the services. Where this occurs, the terminal will inform the user and the UIM of this event. Also, de-registration of services is achieved by inserting the UIM into a terminal, selecting the service(s) for deregistering from the user set of services and initiating the de-registration procedure for that service. Upon completion of this procedure, the information stored in the UIM is updated accordingly.

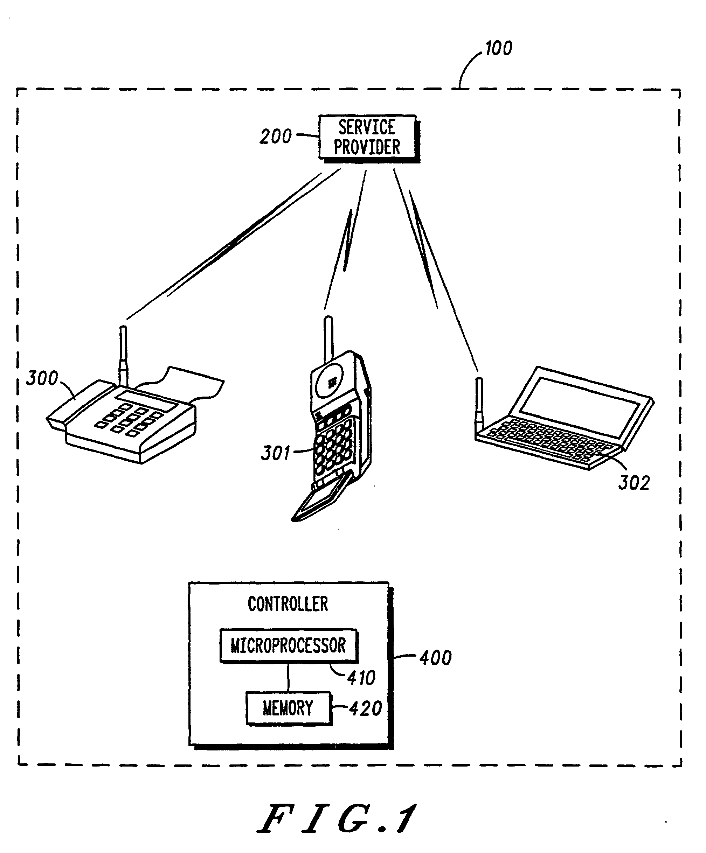

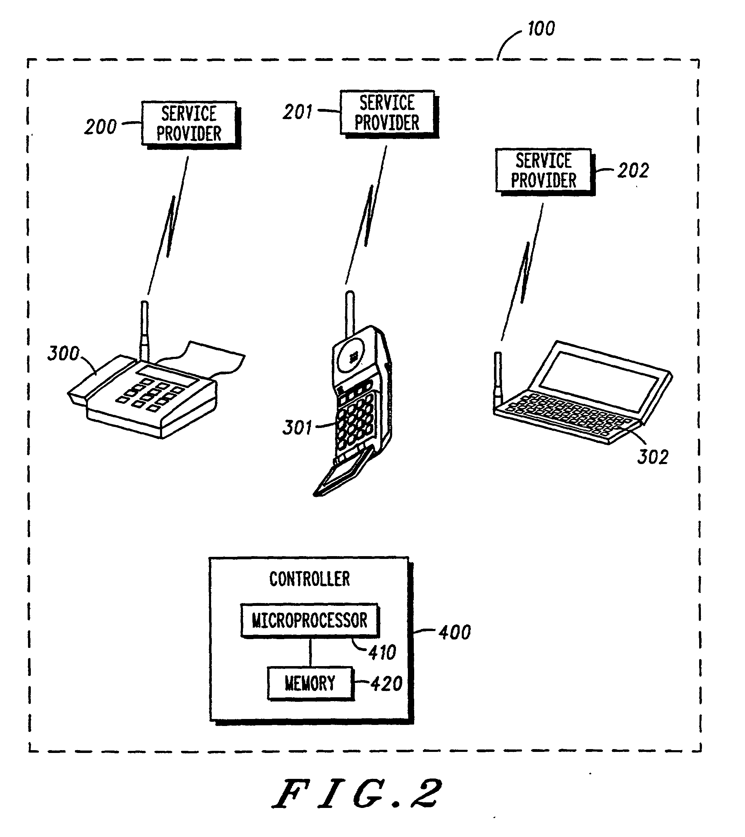

Thus, as shown in FIG. 1, a telecommunications system 100 includes a service provider 200, which provides one or more services to users of at least two terminals 301. Three terminals, including a fax machine 300, a radio telephone 301 and a handheld or laptop computer 302 are shown by way of example. A controller 400, which can be a socalled smartcard, comprises a microprocessor 410 and a memory 420. An alternate embodiment of the present invention shown in FIG. 2 includes at least two service providers, although three service providers 200, 201 and 202 are shown.

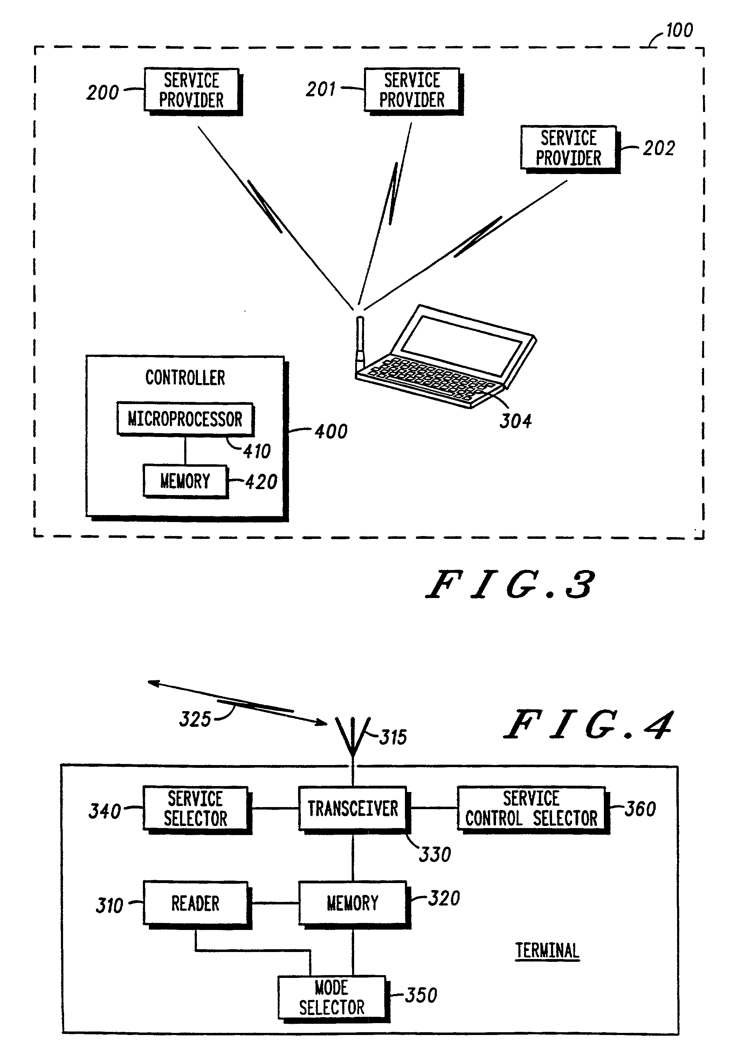

One can envisage a situation where, for example, one service provider 201 specializes in voice services only and does not support data services. Another service provider 200 might specialize in data services , such as facsimile services, only, whilst a third service provider 202 provides a comprehensive set of voice and data services, but at perhaps a slightly lower performance than the other two service providers 200 and 201. As the competition between these service providers develops, the service providers 200, 201 and 202 might choose to add more and more services as they compete for revenue and market share. In these circumstances, it is likely that an end user might purchase more than one terminal 301 Perhaps the user initially starts off with a basic voice terminal 301, such as a cellular telephone, and, not wishing to throw away his investment in the voice terminal 301, he subsequently decides to purchase a fax terminal 300 and also a voice and data terminal 302, such as a lap-top computer, rather than to buy a single more expensive terminal which supports all of the services. These three terminals 300, 301 and 302 fulfill the same function as a more expensive integrated-services terminal 304 as shown in FIG. 3.

As shown in FIGs. 1-3, for example in the alternate embodiment of the controller 400 can be a removable User Identity Module (UIM), having a single dialable number for the end user associated therewith, for example by having the dialable number and/or other identification information uniquely associated with the dialable number, as well as other information, stored as an identifier in an electronic memory 420, which is connected to the microprocessor 410 in the UIM 400. Other information which can be stored in the memory 420 of the UIM 400 includes communications enabling information, such as encryption/decryption algorithms and/or service authorization information.

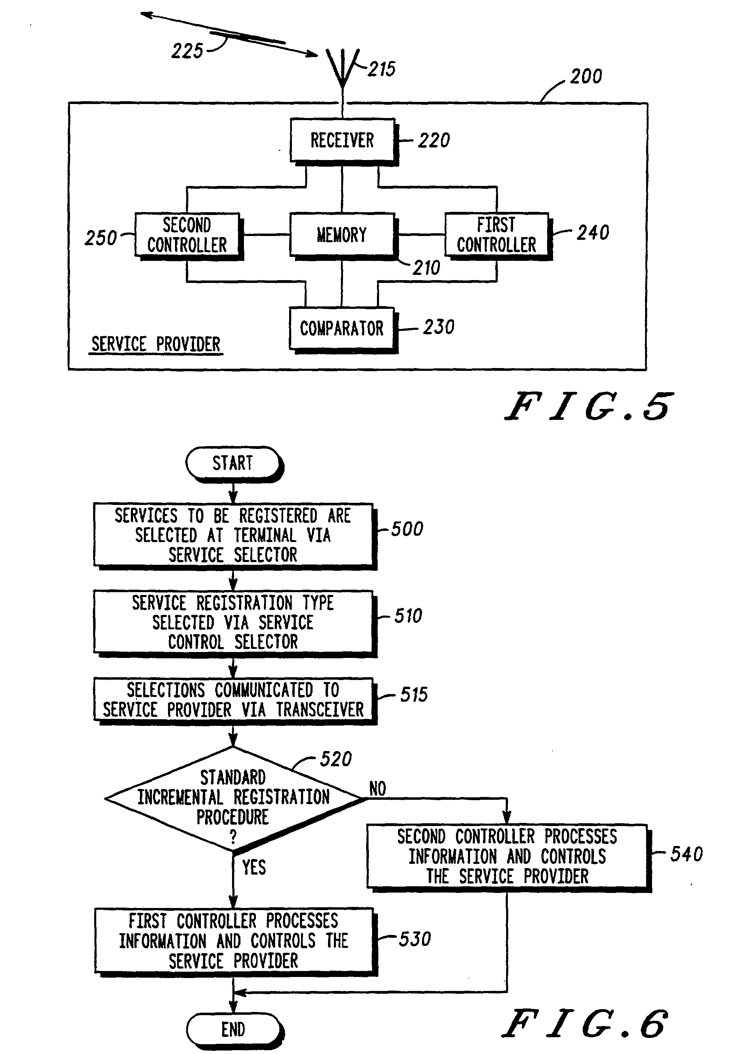

At least one of the terminals includes a card reader. As shown in FIG. 4, a representative terminal includes a reader 310 for reading the UIM 400 to determine the identifier that is associated with the UIM 400 and a memory 320 for storing the read information including the identifier and the communications enabling information. The reader 301 can be a contactless reader or can require contact with the UIM 400, for example by inserting the UIM 400 into a slot (not shown) in the terminal 300. The terminal 300 also includes a transmitter 330 for communicating, via antenna 315, the stored information to the service provider 200, as indicated by arrow 325. A services selector 340 for selecting one or more of the plurality of services to be associated with the identifier is provided so that the user can choose which services, of those offered by the service provider, are required. The services selector 340 can be menu driven, if the terminal has a display, or can be responsive to the selection of buttons corresponding to services to be selected. Information regarding the selected services is stored in the memory 320 for transmittal to the service provider together with the identifier. The terminal 300 also includes a mode switch 350, coupled to the memory 320 and the reader 310, to enable the user to switch between two modes of operation of the terminal 300. In one of the modes, the UIM 400 is required to be physically associated with the terminal 300 for availability of services to be maintained. If the UIM 400 is removed, the terminal 300 is automatically deregistered from the service provider, as in known systems. In the second mode, however, the physical presence of the UIM 400 in the terminal 300 is not required to maintain the availability of the selected services at the terminal 300.

As best shown in FIG. 5, at least one of the service providers 200 includes a receiver 220, coupled to an aerial 215, for receiving the identifier and information regarding selected services transmitted (as shown by arrow 225) by the terminal 300, a memory 210 for storing the received identifier and information regarding which services are currently selected for the particular identifier, a comparator 230, a first controller 240 for allowing or denying access to the requested service depending upon the output of the comparator and for creating and storing in the memory 210 a new set of selected services and a second controller 250 for creating and storing in the memory 210 a new set of selected services and for removing from any existing set of services any service which is to be included in the new set of services.

In operation of the preferred embodiment, the UIM 400 is inserted into the terminal 300. The reader 315 of the terminal 300 reads the identifier and communication enabling information stored in the memory 420 of the UIM 400. The terminal 300 and the UIM 400 together provide a capability called hereinafter "Personality Capture". Personality Capture is defined as the capability to duplicate the functionality and data stored in the UIM 400 and to store this functionality and data in the terminal 300 This can be achieved by the terminal 300 simply using the reader 310 to read the information stored in the memory 420 of the UIM 400 and storing this information in the memory 320 of the terminal 300. This mode of operation can be selected by the mode selector 350 and protected by a pre-determined authentication mechanism, such as password protection. This Personality Capture is invoked prior to the withdrawal of the UIM 400 from the terminal 300. Having completed the Personality Capture in the first terminal 300, and withdrawn the UIM 400 from the first terminal 300, the UIM 400 can subsequently be inserted into a second terminal 301. Thus, the first terminal 300 maintains the availability of the first set of services that were selected and a second set of services can then be selected at the second terminal 301 and can be made available at the second terminal 301.

As described above, when the UIM 400 is inserted into one of the terminals 300, the user is able to select which services are to be accessible via that specific terminal 300 using the services selector 340. The terminal 300 will only accept those services for which it has the appropriate service capability. For example, if the terminal does not have a video display capability, then any service which is dependent upon video images will be rejected by the terminal. Having made the selection, the user selects at the terminal using a service control selector 360 which of the two controllers 240 and 250 available in the service provider 200 are to be activated. These selections are communicated to the service provider 200 by the terminal 300 using the transmitter 330 and the receiver 220. This communication initiates the process of registration for these selected services.

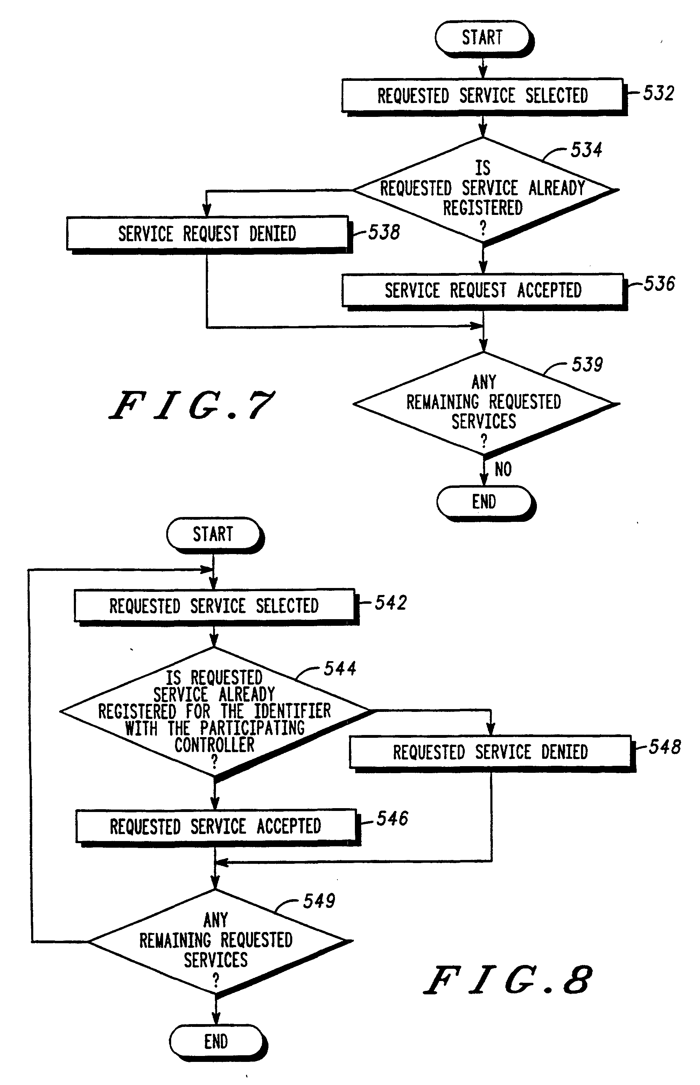

Registration of services is indicated to the service provider 200 as either a standard incremental service registration to complement the services already registered, or a superseding incremental registration. Referring firstly to FIG 6, in the registration procedure commencing at START, the user first selects (500) which of the services are to be registered at the terminal via the services selector. The user then also selects (510) which type of service registration (standard incremental registration or superceding incremental registration) is required using the service control selector.

The terminal then communicates (515) the selections from the previous two steps (500 and 510) to the service provider, via the transmitter and the receiver.

The information about the requested services is passed (520) by the service provider either to the first controller, if a standard incremental registration has been requested during the second step (510) or to the second controller if a superceding incremental registration has been requested during the second step (510) and the procedure comes to an END.

If standard incremental registration procedure has been selected, the first controller then processes (530) the information and controls the service provider accordingly. This procedure is shown in more detail in FIG 7.

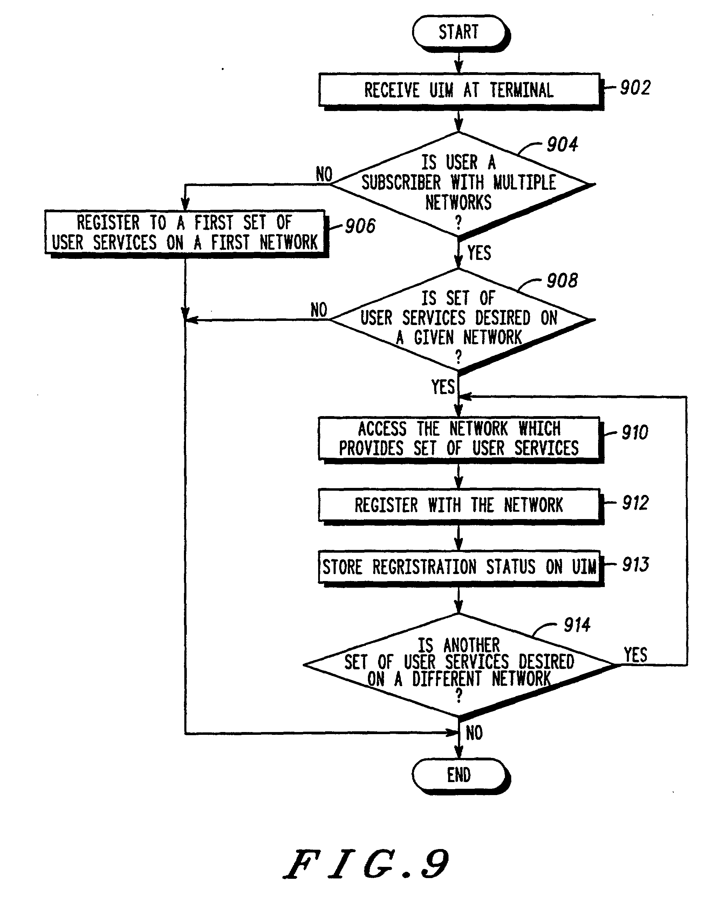

If superceding incremental registration procedure has been selected, the second controller then processes (540) the information and controls the service provider accordingly. This procedure is shown in more detail in FIG 8.

In standard incremental service registration, the service provider 200 shall not cause a new incremental registration of services to supersede any previous registration of services. Furthermore the service provider 200 shall reject an incremental service registration which includes a service already registered. This process operates, as shown in FIG. 7, by the following steps:

Firstly, commencing at START, one of the requested services is selected (532) and passed to the comparator in the service provider. The comparator compares (534) this requested service with information already stored in the memory of the service provider to determine whether or not the requested service is already registered for the identifier associated with the particular controller. If the requested service is the same as one of the currently selected services, the comparator provides a first output. If the requested service is not the same as one of the currently selected services, the comparator provides a second output.

If the comparator provides the second output during the comparison step (534), the requested service is accepted (536) and the service is entered into a service set associated with this registration and this information is stored in the memory. If the comparator provides the first output during the comparison step (534), the requested service is denied (538).

The first controller then determines (539) whether there are any remaining requested services and if so, the procedure is repeated from the first step (532) for the next requested service. For each requested service, the service provider may inform the terminal about the outcome of the registration process in the normal way. If there are no remaining requested services, the procedure ENDS.

In superceding incremental service registration, the service provider 200 knows that new services are being registered but if one of the new services being registered in the current registration attempt has previously been registered via another terminal, then the new registration takes precedence. This control process is executed using the comparator 230, the second controller 250 and the memory 210.

This process operates, as shown in FIG. 8 commencing at START, with the first of the requested services being selected (542) and passed to the comparator in the service provider. Similarly to the standard incremental service procedure, the comparator then compares (544) this requested service with information already stored in the memory of the service provider to determine whether or not the requested service is already registered for the identifier associated with the particular controller. However, if the requested service is the same as one of the currently selected services, the comparator provides a first output and determines which of the existing service sets for the service sets contains the requested service. If the requested service is not the same as one of the currently selected services, the comparator provides a second output, as before.

If the comparator provides the second output during the comparison step (544), the requested service is accepted (546) and the service is immediately entered into a service set associated with this registration and this information is stored in the memory of the service provider. If, however, the comparator provides the first output during the comparison step (544), then the requested service is removed (548) from the set identified during the comparison step (544) and the information stored in the memory is updated to reflect this change. Following the completion of the step (548) of removal and update, the requested service is accepted (546) and the service is subsequently entered into a service set associated with this registration

Finally, the second controller determines (549) whether there are any remaining requested services and if so, the procedure is repeated from the first step (542) for the next requested service. For each requested service, the service provider (200) may inform the terminal (300) about the outcome of the registration process in the normal way. If there are no remaining requested services, the procedure ENDS. This process of registering services at different terminals may be repeated for any additional terminal or terminals being used by the user.

If terminal identities or temporary terminal identities are used by the system, then these identities can easily be associated with the particular instance of registration by the service provider 200 in the memory 210.

The invocation of Personality Capture can be triggered in a number of ways, depending on the product concerned, for example by:
a) pressing a designated button at the terminal 300;
b) pressing a designated button while withdrawing the UIM 400 from the terminal 300;
c) selecting from a menu option at the terminal 300;
d) having a menu option selected while withdrawing the UIM 400 from the terminal 300; or
e) default invocation of Personality Capture upon commencement of withdrawal of the UIM 400.

Turning now to FIG. 9, a flow chart shows the method for registering to multiple networks with a single UIM. At a step 902, a terminal receives the UIM, and determines whether the user of the UIM is a subscriber with multiple networks at a step 904. If the user is not a subscriber to multiple networks, the terminal registers to a first set of user services of a first network at a step 906. However, if the user is a subscriber to multiple networks, the terminal determines whether the set of user services is desired on a given network at a step 908. Although a set of users services is described, the set could comprise a single service. If a given network is desired, the terminal accesses the network which provides the set of user services at a step 910. The terminal then registers with the network at a step 912. The registration status is stored in the UIM at a step 913. The terminal then determines whether there is another set of user services desired on a different network at a step 914. If another set of services is desired, the terminal accesses the different network which provides the set of user services at a step 910.

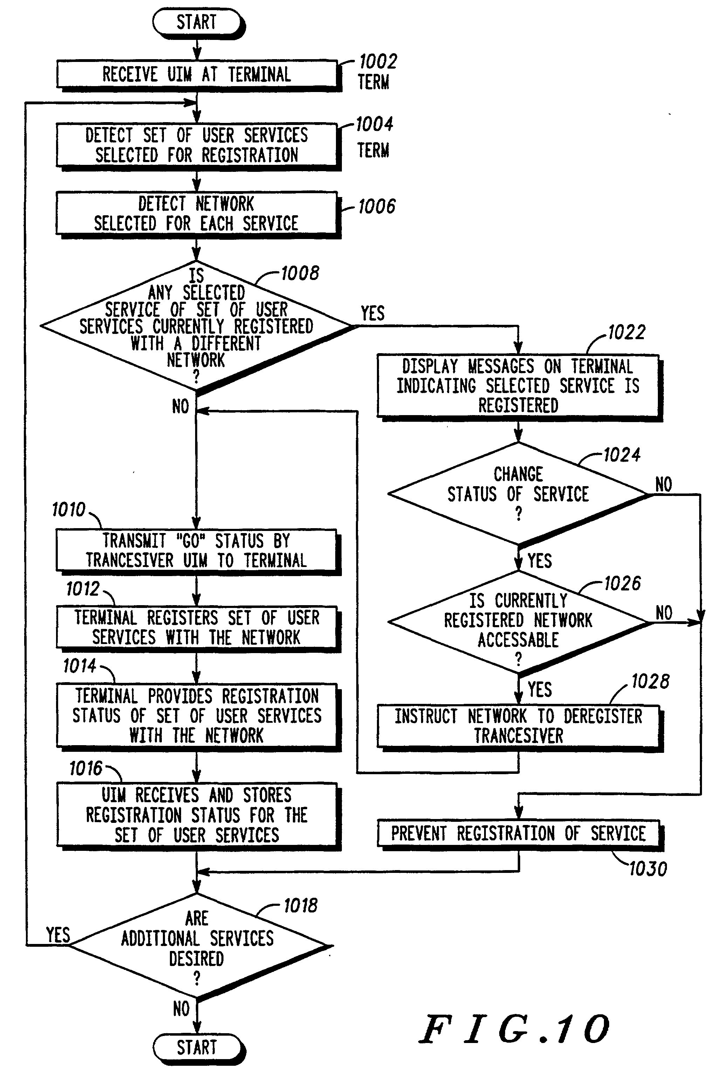

Turning now to FIG. 10, a flow chart shows in more detail the preferred method for registering a terminal to multiple networks according to the present invention. At a step 1002, the terminal receives the UIM. The terminal then detects the set of user services selected for registration at a step 1004 (e.g. via manual selection). The terminal then detects the network selected for each service at a step 1006 (e.g. via manual selection), and determines whether there is any selected service of the set of user services which is currently registered with a different network at a step 1008 by interrogating the UIM. If no service is registered with a different network, a "GO" status is transmitted by the UIM to the terminal at a step 1010. The terminal then registers the set of user services with the network at a step 1012. The terminal also provides the registration status of the set of user services with the network to the UIM at a step 1014. Finally, the UIM receives and stores the registration status for the set of user services at a step 1016. If the terminal determines that additional services are desired at a step 1018 (e.g. manual input), the terminal detects the selection of additional services of the set of user services at a step 1004.

If a selected service is registered with a different network, the terminal displays a message indicating that the selected service is registered at a step 1022. The terminal then determines whether a change of status of services is desired at a step 1024 by receiving feedback from the user (e.g. via manual input). If a change of status is required, the terminal determines whether the currently registered network is accessible at a step 1026. Because the different networks providing service may not be capable of or have an arrangement to exchange information, a network may not be able to change the status of service. If the registered networks are accessible (i.e. capable of exchanging information), the terminal instructs the network to deregister the current service at a step 1028 to enable registration to another network. After deregistering, the UIM transmits a "GO" status to the terminal at a step 1010. If the currently registered network is not accessible at step 1026, the network prevents registration of the service at a step 1030, and determines whether any additional services are desired at a step 1018.

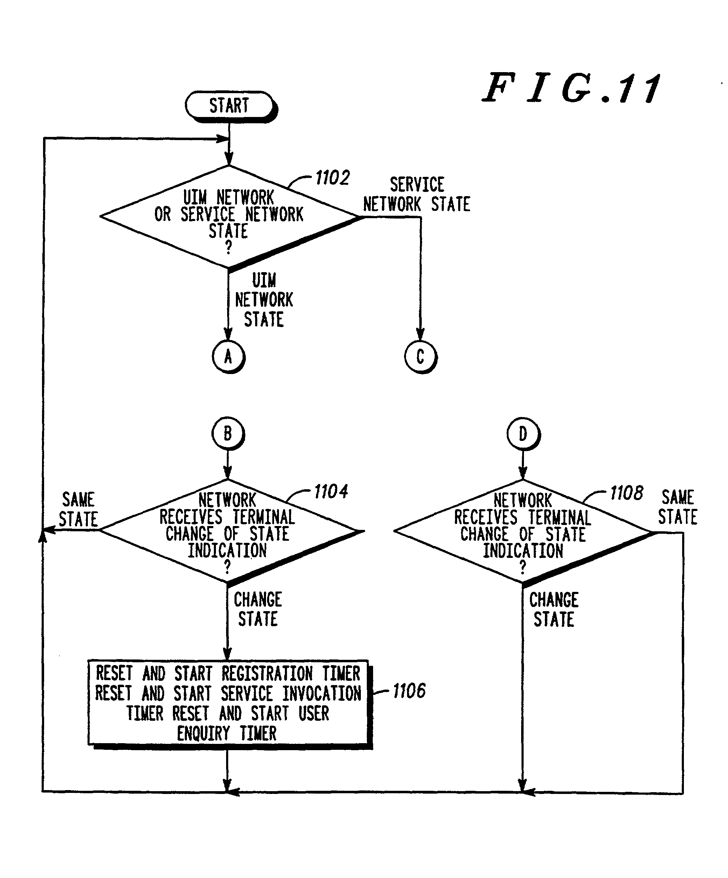

Turning now to FIGs. 11-15, the method steps for deregistration according to the present invention are shown. To more clearly describe the operation of deregistration within the network, various flow charts are used to describe the preferred steps at a various networks or terminals within the system according to the present invention. In particular, a UIM terminal is defined as a terminal having the UIM. A UIM network is a network providing service to the UIM terminal. A service terminal is any terminal not having a UIM. A service network is a network which is providing service to the service terminal. A service terminal may be provided by either the UIM network or the service network.

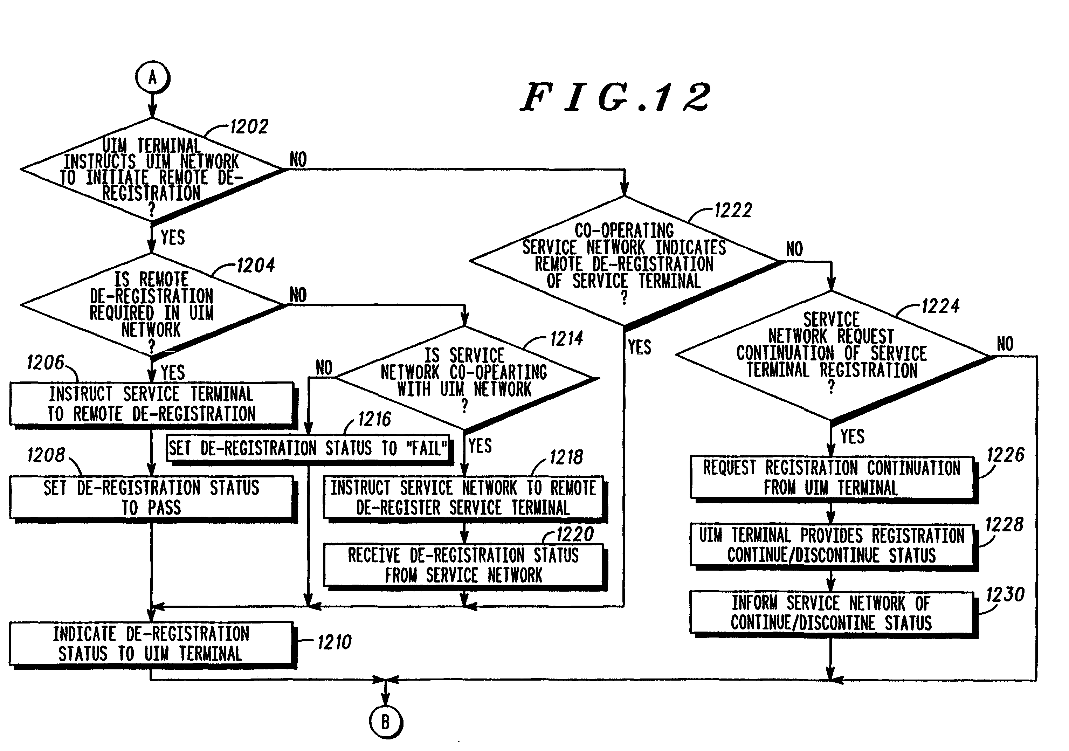

Turning first to FIG. 11, for each user, the network determines whether it is in the UIM network state or service network state for that user at a step 1102. If the network is in the UIM network state, the UIM network determines, as set forth in FIG. 12, whether the UIM terminal instructs the UIM network to initiate remote deregistration at a step 1202. If the UIM terminal has instructed the UIM network to remote deregister another terminal which will be a service terminal, the UIM network then determines whether remote deregistration is required in the UIM network at a step 1204. That is, the UIM network determines whether the service terminal which is being remotely deregistered is being provided service by the UIM network or some other network. If the service terminal is provided service by the UIM network, the UIM network would have access to the service terminal, and therefore instructs the service terminal to remote deregister at a step 1206. The network then sets the deregistration status to "pass" at a step 1208 and indicates the deregistration status to the UIM terminal at a step 1210.

If the servicing terminal requiring remote deregistration outside the UIM network at step 1204, the UIM network determines whether the service network is cooperating with the UIM network at a step 1214. If the networks are not cooperating, the UIM network sets the deregistration status to "fail" at a step 1216. However, if the networks are cooperating, the UIM network instructs the service network to remote deregister the service terminal at a step 1218. The UIM network then receives the deregistration status from the service network at a step 1220.

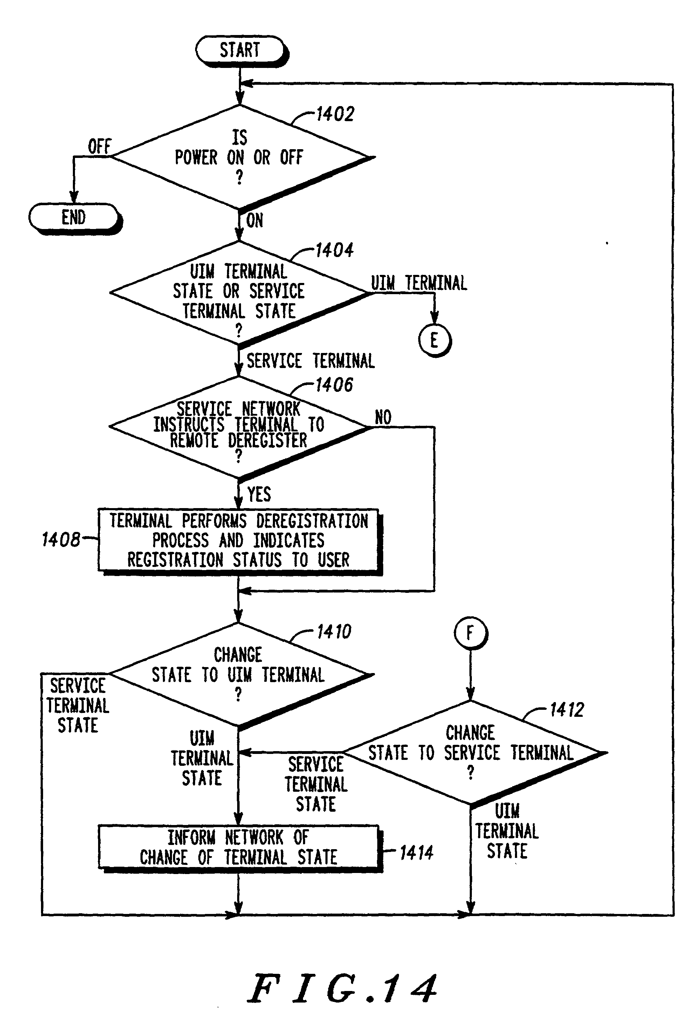

Turning now to FIG. 14, the steps for deregistration of the terminal will be described. Assuming that the terminal is on at a step 1402, the terminal determines whether it is in the UIM terminal state or the service terminal state at a step 1404. If the terminal is in the service terminal state, the terminal determines whether the network providing service has provided instructions to remote deregister at a step 1406. If remote deregistration is required at a step 1406, the terminal performs the deregistration process and indicates the registration status to the user at a step 1408. The terminal then determines whether a change of state to a UIM terminal occurs at a step 1410. As will be described in more detail in reference to the remaining figures, a change in states to the UIM terminal must be provided to the network providing service. In particular, many steps of the deregistration process are determined by whether the terminal is a UIM terminal or a service terminal.

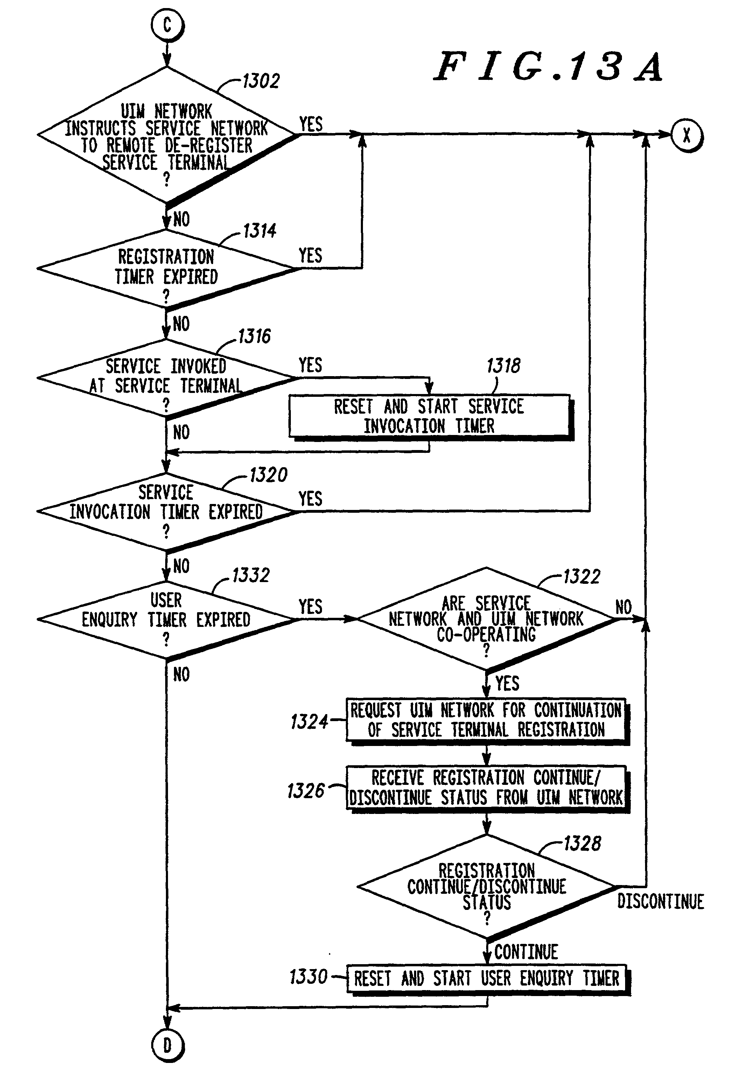

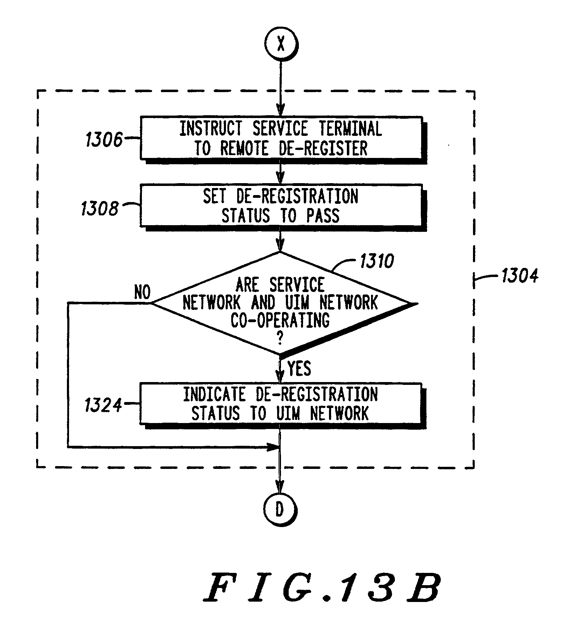

Returning to FIG. 11, if the network is in the service network state, the service network responds to commands from the UIM network according to the steps of FIG. 13. In particular, the service network determines whether the UIM network has instructed the service network to remote deregister the service terminal at a step 1302. If the UIM network has instructed the service network to remote deregister the service terminal, the service network performs remote deregistration according to step 1304. In particular, the service network instructs the service terminal to remote deregister at a step 1306. The service network sets the deregistration status to pass at a step 1308 and determines whether the service network and the UIM network are cooperating at a step 1310. If the networks are cooperating, the service network indicates the deregistration to the UIM network at a step 1312.

The service network may also deregister the service terminal without an instruction from the UIM network. In particular, the service terminal may determine at a step 1314 whether a registration timer has expired. Such a timer may preferably be set to minimize inadvertent or unauthorized use of the network. If the registration timer has expired, the service network instructs the terminal to remote deregister at a step 1304. Alternatively, the service network could determine whether service is invoked at the service terminal at a step 1316. If service is invoked, the service network will reset and start a service invocation timer at a step 1318.

The service network would then determine whether the service invocation timer has expired at a step 1320. Such a timer could also minimize excessive, inadvertent or unauthorized use of service provided by the network. If the service invocation timer has expired, the service terminal performs deregistration at step 1304. However, if the service invocation timer has not expired, the network determines whether an user inquiry timer has expired at a step 1321. If the user inquiry timer has expired, the service network then determines whether the service network and the UIM network are cooperating at a step 1322. If the networks are not cooperating, the service network performs remote deregistration according to steps 1304. If the networks are cooperating, the service network requests the UIM network for continuation of service terminal registration at a step 1324. The service network then receives a registration continue/discontinue status from the UIM network at a step 1326. If a registration discontinue status is received at a step 1328, the service network performs the deregistration function at step 1304. If the service network receives a registration continue status at step 1328, the service network resets and starts the user inquiry timer at step 1330. After the deregistration status has been indicated to the UIM network at step 1312 or after determining whether the user inquiry has expired at step 1321, the network may receive a terminal change of status indication at a step 1108. Although the timers are shown in connection with the operation of the service network, similar timers may be utilized in the UIM network although this option is not shown in FIGs. 11 and 12 to avoid redundancy. Also, timers based on other criteria may be utilized within the spirit and scope of the present invention. The timers described in reference to FIG. 3 are given by way of example.

Returning to FIG. 12, if the UIM terminal does not instruct the UIM network to initiate remote deregistration at step 1202, the UIM network then determines whether the cooperating service network indicates remote deregistration status of the service terminal at a step 1222. If the service network indicates the remote deregistration status, the UIM network provides an indication of the deregistration status to the UIM terminal at step 1210. However, if the cooperating service network does not provide an indication of remote deregistration of a service terminal, the UIM network determines whether the service network has requested continuation of registration for the service terminal at a step 1224. If the service requests a continuation, the UIM networks requests registration continuation from the UIM terminal at a step 1226. The UIM terminal then provides a registration continue/discontinue status at a step 1228. The UIM network then informs the service network of the continue/discontinue status of the UIM network at a step 1230. After indicating the deregistration status to the UIM terminal at step 1210 or informing the service network of the continue/discontinue status at step 1230, the network determines whether it receives a terminal change of state indication at a step 1104. If a change of state of the terminal occurs, the resets and starts a registration timer, resets and starts a service invocation timer and resets and starts a user inquiry timer at a step 1106.

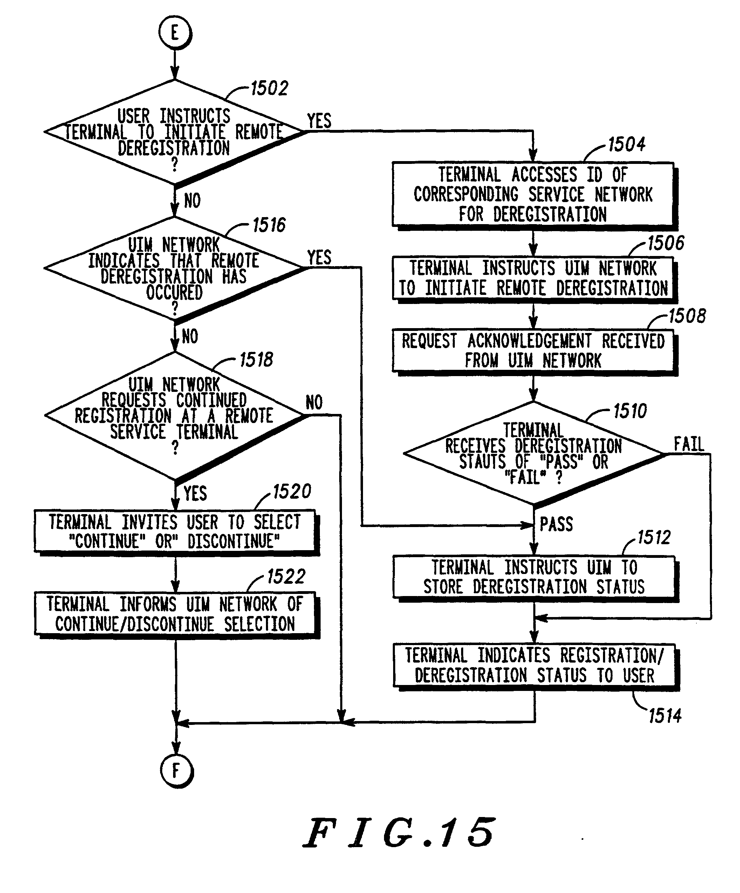

Remote deregistration can either be performed manually by a user or automatically by a network. If the terminal is in the UIM terminal state at step 1404, the UIM terminal could initiate a remote deregistration according to the steps shown in FIG. 15. At a step 1502, the terminal determines whether the user has instructed the terminal to initiate remote deregistration. If the user has instructed the UIM terminal to initiate a remote deregistration, the terminal accesses the UIM to obtain the ID of a corresponding service network for deregistration at a step 1504, assuming that multiple networks are employed in the system. In the embodiment of FIG. 1 where a single network is involved, step 1504 would not be necessary. Step 1504 would however be necessary for the embodiments of FIGs. 2 and 3. The UIM terminal then instructs the UIM network to initiate remote deregistration at a step 1506. The UIM terminal then receives a request acknowledgment from the UIM network at a step 1508. The terminal also determines whether a deregistration status of "pass" or "fail" is received at a step 1510. If a deregistration status of "pass" is received, the terminal instructs the UIM to store the deregistration status at a step 1512. In the embodiment of FIG. 1 where a single network is involved, step 1512 would not be necessary. Step 1512 would however be necessary for the embodiments of FIGs. 2 and 3. The terminal then indicates the registration/deregistration status to the user at a step 1514, and determines whether the terminal has changed a state to a service terminal at a step 1412. If the terminal has changed state at step 1412, the terminal informs the network of the change of terminal state at step 1414.

Turning now to FIG. 15, if the user does not instruct the terminal to initiate remote deregistration at a step 1502, the UIM terminal determines whether the UIM network has indicated that remote deregistration has occurred at a step 1516. If remote deregistration has occurred, the terminal instructs the UIM to store the deregistration status at a step 1512. The terminal then indicates the registration/deregistration status to the user at a step 1514. If remote deregistration has not occurred, the UIM terminal determines whether the UIM network has requested continued service at a remote service terminal at a step 1518. If the UIM network requests continued registration at a remote service terminal, the terminal then invites the user to select "continue" or "discontinue in response to the request at a step 1520. The UIM terminal then informs the UIM network of the confinue/discontinue status at a step 1522.

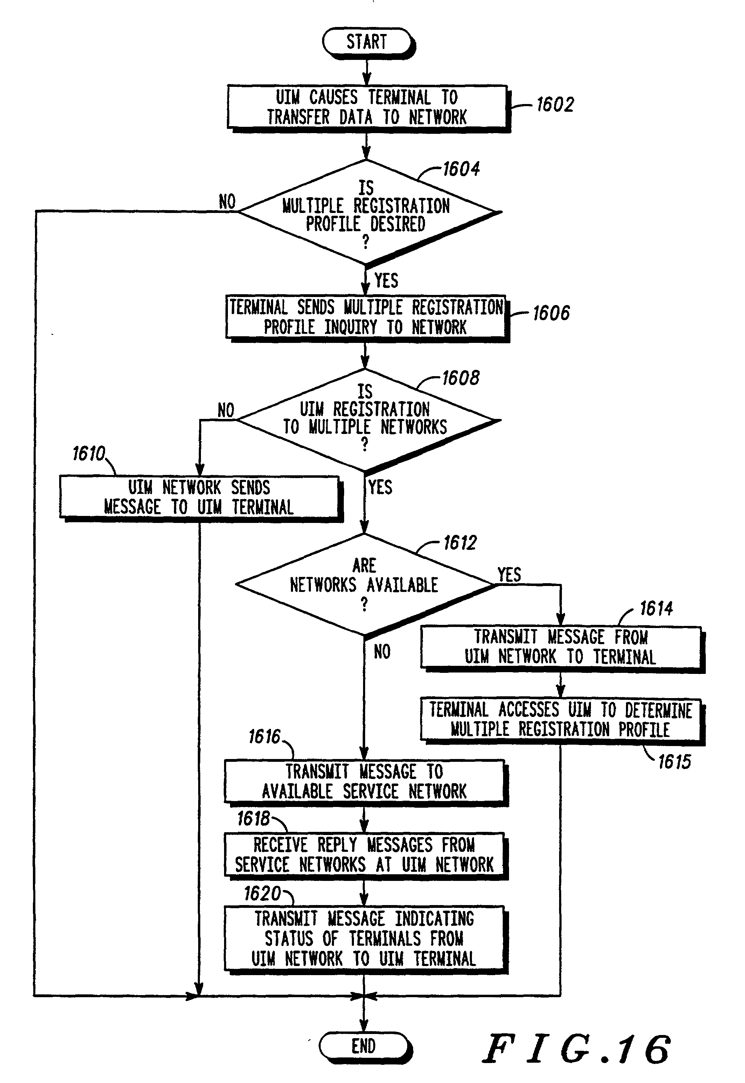

Turning now to FIG. 16, the preferred steps for a multiple registration profile inquiry according to the present invention are shown. In particular, the UIM causes the terminal to transfer local database information to the UIM network upon registration at a step 1602. The UIM network determines whether a multiple registration profile is desired at a step 1604. If a multiple registration profile is desired, the terminal sends a multiple registration profile inquiry to the UIM network at a step 1606. The UIM network determines whether the UIM is registered to multiple networks at a step 1608. If it is not registered to multiple networks, the UIM networks sends the multiple registration message to the terminal at a step 1610. However, if the UIM is registered to multiple networks, the UIM network determines whether the other networks are available at a step 1612. If the other networks are not available, the UIM network transmits a message to the UIM terminal providing a status of terminals registered to the UIM terminal only at a step 1614. In this case, the UIM terminal then accesses the UIM to determine the multiple registration profile at a step 1615. However, if other networks are available, the UIM network will transmit a message to available service networks. UIM network will receive reply messages from the service networks indicating the status of terminals registered with service networks. The UIM network then transmits a message indicating the status of the terminals to the UIM terminal at a step 1616. The message would include the status of any terminal registered to the service networks.

According to an alternate embodiment of the invention, a service activity report informs the active terminals of services taking place based upon a predetermined set of criteria. For example, the report could be generated based upon a certain event, on a periodic basis, or upon request after a predetermined period of time.

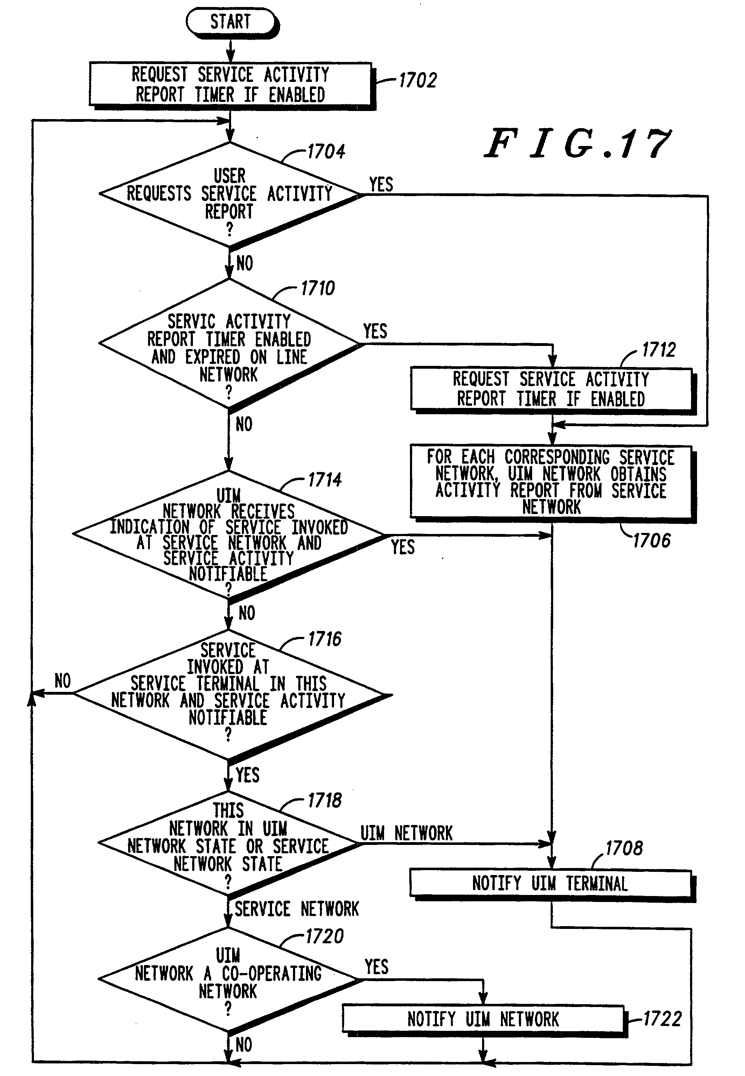

Turning now to FIG. 17, the steps for generating a service activity report according to the present invention are shown. In a step 1702, a service activity report timer is reset. If a user requests a service activity report at a step 1704, the UIM network obtains an activity report from the service network for each cooperating service network at a step 1706. The UIM network then notifies the UIM terminal at a step 1708.

If no service activity report is requested at step 1704, the UIM terminal determines whether a service activity report timer is enabled and expires at a step 1710. If the timer is enabled that expired, the service activity report timer is reset at step 1712. The UIM network obtains the service activity report according to step 1706, and notifies the UIM terminal at step 1708. If the service activity timer is not enabled or has not expired, the UIM network determines whether it receives- an indication of service invoked at a service network and service activity is notifiable. If service is invoked at the service network and service activity is notifiable, the UIM network notifies the UIM terminal at a step 1708. However, if the activity is not invoked at a service terminal or the service activity is not notifiable, it is determined whether the service is invoked at a service terminal in this network and the service activity is notifiable at a step 1716. If the service is invoked at a service terminal in this network and the service activity is notifiable, it is determined whether the network in the UIM network or the service network state at a step 1718. If the network is in the UIM network state, the UIM network notifies the UIM terminal at a step 1708. If the network is in the service network state at step 1718, it is determined whether the UIM network is a cooperating network at a step 1720. If so, the service network notifies the UIM network at a step 1722.

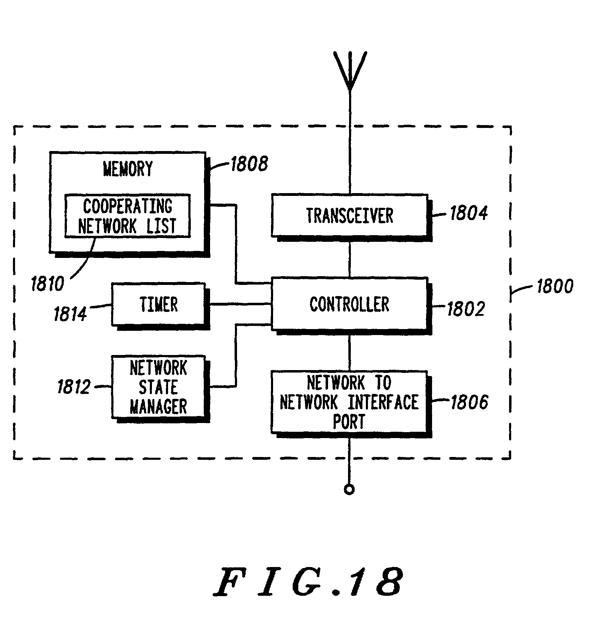

Turning now to FIG. 18, a network apparatus 1800 for accessing multiple communications networks is shown. Network apparatus 1800 is adapted to perform the steps of the networks described herein and preferably includes a controller 1802 which is coupled to a transceiver 1804 for enabling RF communication with a terminal. A network-to-network interface port 1806 also provides information to controller 1802 to enable communication between networks. A memory 1808 having a cooperating network list is also coupled to controller 1802 to enable the controller to determine which networks will provide information regarding terminals on the network. Timers 1814 enable the controller to perform necessary timing functions of the network. Finally, a network state manager 1812 is coupled to the controller to provide network information.

While the specific implementations of the present invention are described above, variations and modifications could be made by one skilled in the art within the scope of the present invention. The present invention should be limited only by the appended claims.

## Claims

1. A telecommunications system (100) comprising:
a service provider (200) providing a plurality of services;
a user set of one or more terminals (300, 301, 302);
a controller (400) having an identifier stored therein;
the or each terminal having:
means (310) for reading the identifier, and **characterised by**
means (340) in the or each terminal for selecting one or more of the plurality of services to be associated with the identifier as a first set of selected services,
means (330) in the or each terminal for communicating to the service provider the identifier and information as to the first set of selected services, and
means (350) in the or each terminal for selecting a mode of operation of the terminal where association between the terminal (300, 301, 302) and the controller (400) is not required to maintain the availability of the first set of selected services at the terminal, whereby the terminal can maintain availability of the first set of selected services of the service provider when the controller is no longer associated with the terminal.

2. A telecommunications system (100) according to claim 1, wherein the user set includes a plurality of terminals (300, 301, 302) and one controller (400) is sequentially associated with each terminal so that the terminals of the user set can provide access to different sets of services simultaneously.

3. A telecommunications system (100) according to either claim 1 or claim 2, wherein a plurality of controllers (400) each having a different identifier stored therein are provided so that one terminal (300) can provide access to sets of selected services associated with the different identifiers simultaneously.

4. A telecommunications system (100) according to any preceding Claim, wherein the controller (400) also has communication enabling information stored therein and the or each terminal reads and stores this communication enabling information.

5. A telecommunications system (100) according to claim 4, wherein the communcation enabling information includes encryption algorithms and/or service authorisation information.

6. A telecommunications system (100) according to any preceding Claim, wherein the telecommunications system (100) is a wireless system and one or more of the terminals (301) is mobile.

7. A telecommunications system (100) according to any preceding Claim, wherein the controller (400) is a removable module which is insertable into the or each terminal (300, 301, 302) so that the terminal can read the identifier and any communication enabling information.

8. A telecommunications system (100) according to any preceding Claim wherein the service provider (200) comprises storage means (210) for storinginformation regarding which services are currently selected for a particular identifier.

9. A telecommunications system (100) according to Claim 8, wherein the the storage means (210) additionally stores information regarding which sets of services are currently available for said particular identifier.

10. A telecommunications system (100) according to either claim 8 or claim 9, wherein the service provider (200) further comprises a receiver (220) for receiving a request from a particular terminal (300) to provide access to a requested set of one or more services for said particular identifier.

11. A telecommunications system (100) according to claim 10, wherein the service provider (200) further comprises a comparator (230) for comparing each requested service in the requested set with the currently selected services for said particular identifier and providing a first output when the requested service is the same as one of the currently selected services and a second output when the requested service is not the same as one of the currently selected services.

12. A telecommunications system (100) according to claim 11, wherein the service provider (200) comprises a first control means (240) for denying access to the requested service if the comparator (230) provides the first output and allowing access to the requested service if the comparator provides the second output.

13. A telecommunications system (100) according to claim 12, wherein the first control means (240) creates and stores in the storage means (210) a second set of selected services containing the requested set of services excluding any services to which access is denied.

14. A telecommunications system (100) according to any one of claims 11, 12 or 13, wherein, when the comparator (230) provides the first output, the comparator (230) also provides an indication of which set of selected services includes a service which is the same as the requested service.

15. A telecommunications system (100) according to claim 14, wherein the service provider (200) comprises a second control means (250) for creating and storing in the storage means (210) a new set of selected services containing the requested set of services and removing from any of the current set of selected services any service which is contained in the new set of selected services.

16. A telecommunications system (100) according to claim 15, wherein the terminal (300, 301, 302) further comprises means (360) for selecting which of the first control means (240) and the second control (250) means shall be used and communicating this selection to the service provider.

17. A method of simultaneously providing access at different terminals (300, 301, 302) to different services offered by a service provider (200), the method comprising the steps of:
associating a controller having an identifier stored therein with one of the different terminals;
reading (1002) by the terminal from the controller the identifier; and **characterised by**;
selecting (500) to which of the different services the terminal shall provide access;
storing a list of the selected services in the terminal;
communicating (515) by the terminal to the service provider the identifier and the list of selected services;
selecting a first mode of the terminal wherein the association between the terminal and the controller is not required to maintain the availability of the selected services by the terminal;
de-associating the controller from the terminal; and
repeating the above steps for as many different terminals and different selections of services as are required so that different terminals provide access to different services simultaneously.

## Patentansprüche

1. Telekommunikationssystem (100), aufweisend:
einen Dienstanbieter (200), der eine Mehrzahl von Diensten anbietet;
eine Benutzergruppe von einem oder mehreren Endgeräten (300, 301, 302);
einen Controller (400), in dem ein Identifizerer gespeichert ist;
wobei das oder jedes Endgerät aufweist:
Mittel (310) zum Lesen des Identifizierers, **gekennzeichnet durch**
Mittel (340) in dem oder jedem Endgerät zum Auswählen von einem oder mehreren der Mehrzahl von Diensten, die dem Identifizierer als eine ersten Gruppe von ausgewählten Diensten zuzuordnen sind,
Mittel (330) in dem oder jedem Endgerät, um den Identifizierer und Informationen bezüglich der ersten Gruppe von ausgewählten Diensten zu dem Dienstanbieter zu übermitteln, und
Mittel (350) in dem oder jedem Endgerät zum Auswählen einer Betriebsart des Endgerätes, in der eine Zuordnung zwischen dem Endgerät (300, 301, 302) und dem Controller (400) nicht erforderlich ist, um die Verfügbarkeit der ersten Gruppe von ausgewählten Diensten an dem Endgerät aufrechtzuerhalten, wobei das Endgerät die Verfügbarkeit der ersten Gruppe von ausgewählten Diensten des Dienstanbieters aufrechterhalten kann, wenn der Controller dem Endgerät nicht länger zugeordnet ist.

2. Telekommunikationssystem (100) nach Anspruch 1, bei dem die Benutzergruppe eine Mehrzahl von Endgeräten (300, 301, 302) umfasst und ein Controller (400) sequentiell jedem Endgerät zugeordnet wird, so dass die Endgeräte der Benutzergruppe gleichzeitig Zugang zu unterschiedlichen Gruppen von Diensten erhalten können.

3. Telekommunikationssystem (100) nach Anspruch 1 oder 2, bei dem eine Mehrzahl von Controllern (400), in denen jeweils ein unterschiedlicher Identifizierer gespeichert ist, vorgesehen sind, so dass ein Endgerät (300) Zugang zu Gruppen von ausgewählten Diensten erhalten kann, die den unterschiedlichen Identifizierern gleichzeitig zugeordnet sind.

4. Telekommunikationssystem (100) nach einem der vorhergehenden Ansprüche, bei dem in dem Controller (400) weiterhin Kommunikationsfreigabeinformationen gespeichert sind und das oder jedes Endgerät diese Kommunikationsfreigabeinformationen liest und speichert.

5. Telekommunikationssystem (100) nach Anspruch 4, bei dem die Kommunikationsfreigabeinformationen Verschlüsselungsalgorythmen und/oder Dienstautorisierungsinformationen umfassen.

6. Telekommunikationssystem (100) nach einem der vorhergehenden Ansprüche, bei dem das Telekommunikationssystem (100) ein kabelloses System ist und eines oder mehrere der Endgeräte (301) mobil sind.

7. Telekommunikationssystem (100) nach einem der vorhergehenden Ansprüche, bei dem der Controller (400) ein entfernbares Modul ist, das in das oder jedes Endgerät (300, 301, 302) eingesetzt werden kann, so dass das Endgerät den Identifizierer und irgendwelche Kommunikationsfreigabeinformationen lesen kann.

8. Telekommunikationssystem (100) nach einem der vorhergehenden Ansprüche, bei dem der Dienstanbieter (200) Speichermittel (210) aufweist, um Informationen darüber zu speichern, welche Dienste derzeit für einen bestimmten Identifizierer ausgewählt sind.

9. Telekommunikationssystem (100) nach Anspruch 8, bei dem die Speichermittel (210) zusätzlich Informationen darüber speichern, welche Gruppen von Diensten derzeit für den bestimmten Identifizierer verfügbar sind.

10. Telekommunikationssystem (100) nach einem der Ansprüche 8 oder 9, bei dem der Dienstanbieter (200) weiterhin einen Empfänger (220) aufweist, um eine Anforderung von einem bestimmten Endgerät (300) zu empfangen, Zugang zu einer angeforderten Gruppe von einem oder mehreren Diensten für den bestimmten Identifizierer bereitzustellen.

11. Telekommunikationssystem (100) nach Anspruch 10, bei dem der Dienstanbieter (200) weiterhin einen Vergleicher (230) aufweist, um jeden angeforderten Dienst in der angeforderten Gruppe mit den derzeit ausgewählten Diensten für den bestimmten Identifizierer zu vergleichen und eine erste Ausgabe zu erzeugen, wenn der angeforderte Dienst der gleiche ist, wie einer der derzeit ausgewählten Dienste, und eine zweite Ausgabe, wenn der angeforderte Dienst nicht der gleiche ist, wie einer der derzeit ausgewählten Dienste.

12. Telekommunikationssystem (100) nach Anspruch 11, bei dem der Dienstanbieter (200) erste Steuermittel (240) aufweist, um den Zugang zu dem angeforderten Dienst zu versagen, wenn der Vergleicher (230) die erste Ausgabe erzeugt, und einen Zugang zu dem angeforderten Dienst zu erlauben, wenn der Vergleicher die zweite Ausgabe erzeugt.

13. Telekommunikationssystem (100) nach Anspruch 12, bei dem die ersten Steuermittel (240) eine zweite Gruppe von ausgewählten Diensten, die die angeforderte Gruppe von Dienste ausschließlich irgendwelcher Dienste, zu denen der Zugang verweigert wird, enthalten, erzeugen und in den Speichermitteln (210) speichern.

14. Telekommunikationssystem (100) nach einem der Ansprüche 11, 12 oder 13, bei dem, wenn der Vergleicher (230) die erste Ausgabe erzeugt, der Vergleicher (230) weiterhin einen Hinweis liefert, welche Gruppe von ausgewählten Diensten einen Dienst umfasst, der der gleiche ist, wie der angeforderte Dienst.

15. Telekommunikationssystem (100) nach Anspruch 14, bei dem der Dienstanbieter (200) zweite Speichermittel (250) aufweist, um eine neue Gruppe von ausgewählten Diensten, die die angeforderte Gruppe von Diensten enthalten, zu erzeugen und in den Speichermitteln (210) zu speichern und aus irgendeiner der aktuellen Gruppe von ausgewählten Diensten irgendeinen Dienst zu entfernen, der in der neuen Gruppe von ausgewählten Diensten enthalten ist.

16. Telekommunikationssystem (100) nach Anspruch 15, bei dem das Endgerät (300, 301, 302) weiterhin Mittel (360) aufweist, um auszuwählen, welche der ersten Steuermittel (240) und der zweiten Steuermittel (250) verwendet werden sollen und diese Auswahl dem Dienstanbieter mitzuteilen.

17. Verfahren, um gleichzeitig Zugang an unterschiedlichen Endgeräten (300, 301, 302) zu unterschiedlichen Diensten vorzusehen, die von einem Dienstanbieter (200) angeboten werden, wobei das Verfahren die folgenden Schritte umfasst:
Zuordnen eines Controllers, in dem ein Identifizierer gespeichert ist, zu einem der unterschiedlichen Endgeräte;
Lesen (1002) des Identifizierers von dem Controller durch das Endgerät; **gekennzeichnet durch**:
Auswählen (500) zu welchen der unterschiedlichen Dienste das Endgerät Zugang erhalten soll;
Speichern einer Liste der ausgewählten Dienste in dem Endgerät;
Übertragen (515) des Identifizierers und der Liste von ausgewählten Diensten zu dem Dienstanbieter **durch** das Endgerät;
Auswählen einer ersten Betriebsart des Endgerätes, in der die Zuordnung zwischen dem Endgerät und dem Controller nicht erforderlich ist, um die Verfügbarkeit der ausgewählten Dienste an dem Endgerät aufrechtzuerhalten;
Aufheben der Zuordnung von dem Controller zu dem Endgerät; und
Wiederholen der vorstehenden Schritte für so viele unterschiedliche Endgeräte und unterschiedliche Auswahlen von Diensten wie erforderlich, so dass unterschiedliche Endgeräte gleichzeitig Zugang zu unterschiedlichen Diensten erhalten.

## Revendications

1. Système de télécommunication (100) comprenant :
un fournisseur de service (200) fournissant une pluralité de services ;
un poste d'abonné consistant en un ou plusieurs terminaux (300, 301, 302) ;
un contrôleur (400) possédant un identifiant stocké à l'intérieur ;
le ou chaque terminal possédant :
un moyen (310) de lecture de l'identifiant, et étant **caractérisé par**
un moyen (340), dans le ou chaque terminal, de sélection d'un ou de plusieurs de la pluralité de services qui doivent être associés à l'identifiant comme étant un premier jeu de services sélectionnés,
un moyen (330), dans le ou chaque terminal, de communication, au fournisseur de service, de l'identifiant et de l'information ainsi qu'au premier jeu de services sélectionnés, et
un moyen (350), dans le ou chaque terminal, de sélection d'un mode de fonctionnement du terminal lorsque l'association entre le terminal (300, 301, 302) et le contrôleur (400) n'est pas nécessaire pour maintenir la disponibilité du premier jeu de services sélectionnés au niveau du terminal, grâce à quoi le terminal peut maintenir la disponibilité du premier jeu de services sélectionnés du fournisseur de service lorsque le contrôleur n'est plus associé avec le terminal.

2. Système de télécommunication (100) selon la revendication 1, dans lequel le jeu utilisateur comporte une pluralité de terminaux (300, 301, 302) et un contrôleur (400) est associé, de manière séquentielle, avec chaque terminal de sorte que les terminaux du jeu utilisateur peuvent fournir un accès aux différents jeux de services simultanément.

3. Système de télécommunication (100) selon l'une ou l'autre des revendications 1 ou 2, dans lequel une pluralité de contrôleurs (400), chacun possédant un identifiant différent stocké à l'intérieur, est fournie de sorte qu'un terminal (300) peut fournir un accès aux jeux de services sélectionnés associés aux différents identifiants simultanément.

4. Système de télécommunication (100) selon l'une quelconque des revendications précédentes, dans lequel le contrôleur (400) possède également des informations permettant la communication stockées à l'intérieur et le ou chaque terminal lit et stocke ces informations permettant la communication.

5. Système de télécommunication (100) selon la revendication 4, dans lequel les informations permettant la communication comportent des algorithmes de chiffrage et/ou des informations d'autorisation de service.

6. Système de télécommunication (100) selon l'une quelconque des revendications précédentes, dans lequel le système de télécommunication (100) est un système sans fil et un ou plusieurs terminaux (301) est (sont) mobile(s).

7. Système de télécommunication (100) selon l'une quelconque des revendications précédentes, dans lequel le contrôleur (400) est un module amovible qui peut être inséré dans le ou chaque terminal (300, 301, 302) de sorte que le terminal peut lire l'identifiant et n'importe quelle information permettant la communication.

8. Système de télécommunication (100) selon l'une quelconque des revendications précédentes, dans lequel le fournisseur de service (200) comprend un moyen de stockage (210) permettant de stocker les informations indiquant quels services sont actuellement sélectionnés pour un identifiant particulier.

9. Système de télécommunication (100) selon la revendication 8, dans lequel le moyen de stockage (210) stocke, de plus, les informations indiquant quels jeux de services sont actuellement disponibles pour ledit identifiant particulier.

10. Système de télécommunication (100) selon l'une ou l'autre des revendications 8 ou 9, dans lequel le fournisseur de service (200) comprend en outre un récepteur (220) pour recevoir une demande provenant d'un terminal particulier (300) afin de fournir un accès à un jeu demandé d'un ou de plusieurs service(s) pour ledit identifiant particulier.

11. Système de télécommunication (100) selon la revendication 10, dans lequel le fournisseur de service (200) comprend en outre un comparateur (230) pour comparer chaque service demandé dans le jeu demandé avec les services actuellement sélectionnés pour ledit identifiant particulier et fournir une première sortie lorsque le service demandé est le même que l'un parmi les services actuellement sélectionnés et une seconde sortie lorsque le service demandé n'est pas le même que l'un des services actuellement sélectionnés.

12. Système de télécommunication (100) selon la revendication 11, dans lequel le fournisseur de service (200) comprend un premier moyen de commande (240) pour refuser l'accès au service demandé si le comparateur (230) fournit la première sortie et autoriser l'accès au service demandé si le comparateur fournit la seconde sortie.

13. Système de télécommunication (100) selon la revendication 12, dans lequel le premier moyen de commande (240) crée et stocke, dans le moyen de stockage (210), un second jeu de services sélectionnés contenant le jeu de services demandé à l'exclusion de tout service auquel l'accès a été refusé.

14. Système de télécommunication (100) selon l'une quelconque des revendications 11, 12 ou 13, dans lequel le comparateur (230) fournit la première sortie, le comparateur (230) fournit également une indication disant quel jeu de services sélectionnés comporte un service qui est le même que le service demandé.

15. Système de télécommunication (100) selon la revendication 14, dans lequel le fournisseur de service (200) comprend un second moyen de commande (250) pour créer et stocker, dans le moyen de stockage (210), un nouveau jeu de services sélectionnés contenant le jeu de services demandé et enlevant de tout jeu actuel de services sélectionnés, tout service qui est contenu dans le nouveau jeu de services sélectionnés.

16. Système de télécommunication (100) selon la revendication 15, dans lequel le terminal (300, 301, 302) comprend en outre un moyen (360) pour sélectionner lequel parmi les premier moyen de commande (240) et second moyen de commande (250) sera utilisé et pour communiquer cette sélection au fournisseur de service.

17. Procédé de fourniture simultanée d'un accès, au niveau de différents terminaux (300, 301, 302), à différents services offerts par un fournisseur de services (200), ce procédé comprenant les étapes suivantes :
association d'un contrôleur possédant un identifiant stocké à l'intérieur, avec l'un des différents terminaux ;
lecture (2002) par le terminal, à partir du contrôleur, de l'identifiant ; et **caractérisé par** :
la sélection (500) de celui des différents services auquel le terminal fournira l'accès ;
stockage d'une liste des services sélectionnés dans le terminal ;
communication (515) par le terminal, au fournisseur de services, de l'identifiant et de la liste des services sélectionnés ;
sélection d'un premier mode de terminal dans lequel l'association entre le terminal et le contrôleur n'a pas besoin de maintenir la disponibilité des services sélectionnés par le terminal ;
suppression de l'association du contrôler à partir du terminal ; et
répétition des étapes ci-dessus pour autant de terminaux différents et de sélections de services différentes que nécessaire, de sorte que les différents terminaux fournissent un accès aux différents services, simultanément.
